Europäisches Patentamt

European Patent Office

Office européen des brevets

(11) Numéro de publication: **0 305 281 B1**

(12) # FASCICULE DE BREVET EUROPEEN

(45) Date de publication du fascicule du brevet:
**23.10.91 Bulletin 91/43**

(51) Int. Cl.$^5$: **G02C 5/14**

(21) Numéro de dépôt: **88402136.1**

(22) Date de dépôt: **22.08.88**

(54) **Dispositif et procédé de protection de branches de lunettes, et planche portant de tels dispositifs.**

(30) Priorité: **25.08.87 FR 8711897**

(43) Date de publication de la demande:
**01.03.89 Bulletin 89/09**

(45) Mention de la délivrance du brevet:
**23.10.91 Bulletin 91/43**

(84) Etats contractants désignés:
**AT BE CH DE ES FR GB GR IT LI LU NL SE**

(56) Documents cités:
**DE-A- 2 722 996**
**DE-A- 3 147 135**

(56) Documents cités:
**GB-A- 2 200 473**
**US-A- 2 117 466**
**US-A- 2 436 101**
**US-A- 2 502 734**

(73) Titulaire: **Daniel, Pierre**
**10, rue de la Friche**
**F-27000 Evreux (FR)**

(72) Inventeur: **Daniel, Pierre**
**10, rue de la Friche**
**F-27000 Evreux (FR)**

(74) Mandataire: **Arnaud, Jean Pierre Alfred**
**Cabinet Arnaud 94 rue Saint-Lazare**
**F-75009 Paris (FR)**

## Description

La présente invention concerne les dispositifs de protection de branches de lunettes, destinés à être utilisés notamment dans les salons de coiffure pendant le traitement de la chevelure par des agents chimiques.

Depuis plusieurs dizaines d'années, les chevelures sont traitées par des produits chimiques dans les salons de coiffure, par exemple lors d'une teinture. Les agents chimiques utilisés ont très souvent une action sur la matière formant les branches de lunettes (coloration, décoloration, corrosion, etc). Les professionnels des salons de coiffure demandent donc aux personnes portant des lunettes d'enlever celles-ci avant un tel traitement. Comme ce traitement est souvent long et prend parfois plus d'une heure, la personne privée de ses lunettes subit une gêne très importante.

Le brevet des Etats-Unis d'Amérique n° 2436101 décrit un petit tube de matière plastique de faible section interne, destiné à être enfilé sur l'extrémité d'une branche de lunettes formée d'un fil métallique de section circulaire, afin que le tube reste de manière pratiquement définitive sur l'extrémité de la branche de lunettes qui est au contact de l'oreille. Ce dispositif est destiné à être fermement retenu sur la branche de lunettes.

La demande de brevet allemand n° 2722996 décrit une gaine tissée ou tricotée, assurant un isolement contre la chaleur lorsqu'une branche de lunettes qu'elle recouvre intimement et qui a été préalablement chauffée, est déformée sur la tête d'une personne sur laquelle la paire de lunette doit être ajustée.

Le document GB-A-2200473 qui est un document intercalaire décrit un dispositif de protection de branche de lunettes comportant un tube de matière plastique retenue par une bague élastique. Comme la bague doit être glissée sur le tube lors de la fabrication, et doit ensuite serrer le tube contre la branche de lunettes, le tube est étroit ; son montage et celui de la bague sur une branche de lunettes sont difficiles, et les dimensions du tube doivent être adaptées à celles de la branche de lunettes. Il faut donc disposer de toute une gamme de tailles et, en outre, la fabrication nécessite plusieurs opérations dont certaines sont délicates.

L'invention concerne un dispositif de protection permettant la résolution du problème précité d'une manière simple, rapide, commode et peu coûteuse.

Plus précisément, l'invention concerne un dispositif de protection temporaire d'une branche de lunettes contre des agents chimiques de traitement, comportant une enveloppe allongée, ayant de préférence la forme d'une crosse, constituée d'un matériau imperméable aux agents chimiques de traitement, cette enveloppe allongée étant fermée sur ses deux côtés longitudinaux au moins et aussi de préférence à une extrémité, et étant suffisamment large, par rapport à la dimension des branches de lunettes, pour qu'elle puisse être facilement mise en place par enfilement sur la branche de lunettes, tout en étant suffisamment longue pour qu'elle recouvre la totalité ou au moins la plus grande partie de la longueur de la branche de lunettes.

L'enveloppe du dispositif, qui a de préférence la forme d'une crosse, est avantageusement formée par deux feuilles de matière plastique soudées à plat sur les deux côtés longitudinaux et de préférence à une extrémité. Il est avantageux que l'extrémité ouverte ou l'une des extrémités ouvertes au moins ait une ouverture dont les bords formés par les deux feuilles sont décalés l'un par rapport à l'autre, si bien que l'introduction de la branche de lunettes par l'ouverture est très facile.

L'invention concerne aussi une planche comprenant une feuille de support et plusieurs dispositifs de protection précités, collés sur cette feuille de support. Cette dernière est avantageusement formée de papier. Le collage des dispositifs de support est avantageusement réalisé directement par la matière plastique fondue au niveau des soudures des deux feuilles de matière plastique du dispositif.

L'invention concerne aussi un procédé de protection de lunettes contre des agents chimiques pendant le traitement de la chevelure, ce procédé comprenant le gainage de chaque branche des lunettes par un dispositif de protection tel que défini précédemment.

D'autres caractéristiques et avantages de l'invention ressortiront mieux de la description qui va suivre, faite en référence au dessin annexé sur lequel :

la figure 1 est une élévation d'un dispositif de protection selon l'invention ;

la figure 2 représente le dispositif de la figure 1 placé sur une branche de lunettes ; et

la figure 3 représente, sous forme schématique, une planche comportant plusieurs dispositifs de protection selon l'invention.

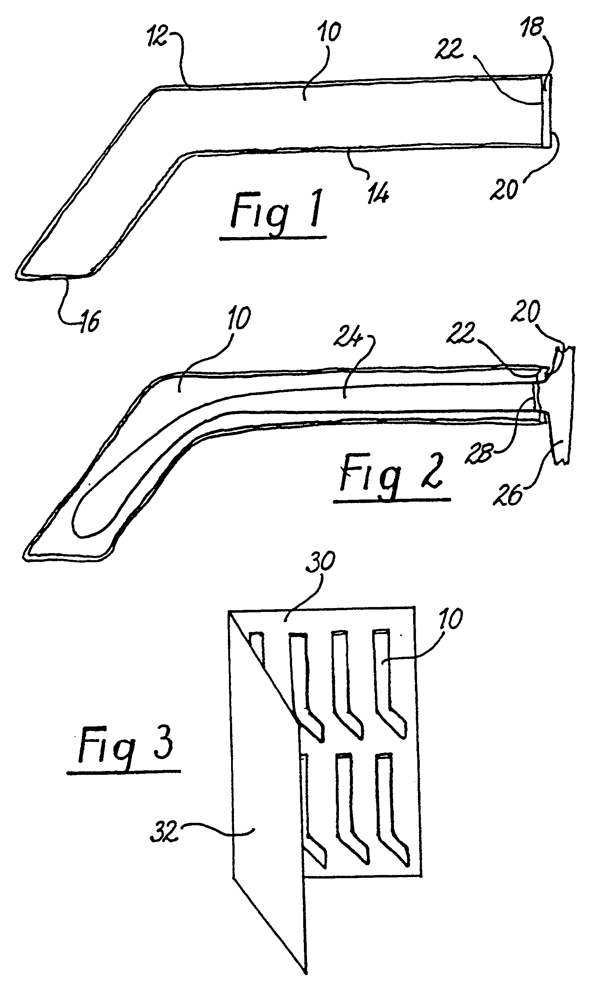

La figure 1 représente un dispositif de protection de branches de lunettes selon l'invention, ayant une enveloppe 10 de forme allongée ressemblant à une crosse. L'enveloppe est formée de deux feuilles de matière plastique soudées l'une à l'autre le long des grands côtés 12, 14 et à une extrémité 16. L'autre extrémité 18 est ouverte et est délimitée par deux bords 20, 22 qui sont décalées l'un par rapport à l'autre.

La figure 2 représente le dispositif monté sur une branche de lunettes. On note que la branche de lunettes 24, articulée sur une monture 26 au niveau d'un raccord 28, est totalement protégée, c'est-à-dire sur toute sa longueur. On note aussi qu'il reste une place importante autour de la branche de lunettes, dans l'enveloppe 10, si bien que l'introduction de la branche dans l'enveloppe est facile.

L'enveloppe 10 est formée de feuilles d'un matériau imperméable aux agents chimiques utilisés au cours des traitements de la chevelure. Il s'agit avantageusement de feuilles de matière plastique, de préférence d'une matière peu coûteuse telle que le chlorure de polyvinyle, le polyéthylène ou le polypropylène. Il est avantageux que la matière plastique choisie permette un soudage facile de deux feuilles l'une sur l'autre, au niveau des bords 12, 14, 16, par chauffage à une température modérée, par exemple de l'ordre de 120 à 150°C. Cependant, les feuilles peuvent aussi être fixées par collage ou de toute autre manière. En particulier, un bord au moins peut être simplement replié, une seule feuille de matière plastique étant soudée ou collée sur elle-même.

De préférence, les feuilles de matière plastique utilisées pour la formation de l'enveloppe 10 sont très minces afin qu'elles ne gênent pas la personne portant les lunettes, lorsque des dispositifs sont placés sur les branches. Par exemple, l'épaisseur de la feuille de matière plastique est inférieure à 10 μm et de préférence de l'ordre de quelques microns. En outre, bien qu'elle puisse être opaque, la feuille de matière plastique est de préférence transparente et colorée.

Bien qu'on ait représenté un dispositif de protection ayant la forme d'une crosse, cette forme est simplement destinée à faciliter la mise en place. En effet, lorsque la matière plastique est suffisamment mince, il suffit que l'enveloppe 10 ait une forme allongée et soit suffisamment longue pour qu'elle recouvre la totalité ou la plus grande partie d'une branche de lunettes. Par exemple, l'enveloppe peut avoir une forme rectiligne et peut être par exemple un simple tube de matière plastique.

Bien qu'on ait représenté les bords des deux feuilles décalés au niveau de l'ouverture d'entrée, comme l'indiquent les références 20 et 22, cette caractéristique n'est pas indispensable. En outre, elle peut être perfectionnée, par exemple par formation d'au moins un bord 20 ou 22 sous forme arrondie, permettant une augmentation de la dimension de l'ouverture.

On note sur la figure 2 que l'enveloppe a une largeur suffisante pour que la branche de lunettes ne soit pas serrée. Cette caractéristique est importante pour la facilité d'enfilement du dispositif de protection sur la branche de lunettes.

La figure 3 représente un exemple de planche de support de dispositifs 10 de protection. Plusieurs dispositifs 10 sont placés les uns à côté des autres sur une face d'une feuille de support 30 dont l'autre face 32 peut par exemple porter un mode d'emploi, etc ou même d'autres dispositifs de protection. Ces planches facilitent beaucoup la manutention des dispositifs de protection qui sont des objets extrêmement légers.

Les dispositifs de protection peuvent être fabriqués par divers procédés bien connus. Il est souhaitable que deux feuilles de matière plastique soient soudées l'une à l'autre car les soudures peuvent être bien étanches et peuvent ainsi être assurer une protection efficace. Cependant, d'autres procédés peuvent être utilisés, par exemple le collage, du moment qu'ils empêchent la pénétration des agents chimiques de traitement jusqu'à la branche de lunettes.

## Revendications

1. Dispositif de protection temporaire d'une branche de lunettes contre des agents chimiques utilisés pour le traitement des cheveux, ledit dispositif comportant une enveloppe allongée (10) enfichable sur la branche de lunettes et possédant les propriétés suivantes :

l'enveloppe (10) est formée de deux feuilles d'une matière plastique, soudées l'une à l'autre le long des côtés longitudinaux, la matière étant imperméable aux agents chimiques de traitement,

l'enveloppe est fermée sur ses côtés longitudinaux et contient au moins une extrémité ouverte,

l'enveloppe a une largeur suffisante, sur toute sa longueur, pour que la branche de lunettes ne soit pas serrée, si bien qu'il reste une place importante autour de la branche de lunettes, et que l'introduction de la branche dans l'enveloppe est facilité, et

l'enveloppe est suffisamment longue pour qu'elle recouvre normalement la totalité ou la plus grande partie d'une branche de lunettes.

2. Dispositif selon la revendication 1, caractérisé en ce que l'enveloppe (10) a la forme d'une crosse.

3. Dispositif selon l'une des revendications 1 et 2, caractérisé en ce que l'enveloppe (10) a une seule extrémité ouverte (18), et que les bords (20, 22) de l'ouverture de l'extrémité ouverte sont décalés l'un par rapport à l'autre, dans la direction longitudinale de l'enveloppe.

4. Planche de dispositifs de protection de branches de lunettes, caractérisée en ce qu'elle comporte
— une feuille de support (30), et
— plusieurs dispositifs (10) de protection selon l'une quelconque des revendications précédentes, collés sur la feuille de support.

5. Planche selon la revendication 4, caractérisée en ce que la feuille de support (30) est formée de papier.

6. Planche selon l'une des revendications 4 et 5, caractérisée en ce que les dispositifs de protection (10) sont directement collés à la feuille de support par leur matière plastique.

7. Procédé de protection d'une branche de lunettes pendant le traitement d'une chevelure par des agents chimiques, caractérisé en ce qu'il comprend le gainage de chaque branche de lunettes par un dispositif de protection selon l'une quelconque des revendications 1 à 3.

**Patentansprüche**

1. Vorrichtung zum zeitweisen Schutz eines Brillenbügels vor chemischen Stoffen zur Haarbehandlung, enthaltend eine längliche Ummantelung (10), die auf den Brillenbügel aufgeschoben werden kann und folgende Merkmale zeigt :

die Ummantelung (10) ist aus zwei Kunststoffblättern hergestellt, die längs der Längsseiten miteinander verschweißt sind, wobei der Kunststoff gegen die chemischen Stoffe zur Behandlung undurchlässig ist,

die Ummantelung ist auf ihren Längsseiten geschlossen und enthält wenigstens ein offenes Ende,

die Ummantelung weist über ihre gesamte Länge eine ausreichende Weite auf, um den Brillenbügel nicht zu drücken, so daß ein beachtlicher Raum um den Brillenbügel bestehen bleibt und das Einführen des Bügels in die Ummantelung vereinfacht ist, und

die Ummantelung ist ausreichend lang, um einen Brillenbügel üblicherweise vollständig oder zum größten Teil abzudecken.

2. Vorrichtung nach Anspruch 1, dadurch gekennzeichnet, daß die Ummantelung (10) die Form eines gekrümmten Griffes aufweist.

3. Vorrichtung nach einem der Ansprüche 1 und 2, dadurch gekennzeichnet, daß die Ummantelung (10) ein einziges offenes Ende (18) aufweist, und daß die Kanten (20, 22) der Öffnung des offenen Endes gegeneinander in Längsrichtung der Ummantelung versetzt sind.

4. Brett der Vorrichtung zum Schutz von Brillenbügeln, dadurch gekennzeichnet, daß es enthält

— ein Halterungsblatt (30), und

— verschiedene Schutzvorrichtungen (10) nach einem der vorgehenden Ansprüche, die auf das Halterungsblatt geklebt sind.

5. Brett nach Anspruch 4, dadurch gekennzeichnet, daß das Halterungsblatt (30) aus Papier hergestellt ist.

6. Brett nach einem der Ansprüche 4 und 5, dadurch gekennzeichnet, daß die Schutzvorrichtungen (10) unmittelbar an das Halterungsblatt (30) mittels ihres Kunststoffes geklebt werden.

7. Verfahren zum Schützen eines Brillenbügels während der Haarbehandlung mit chemischen Stoffen, dadurch gekennzeichnet, daß jeder Brillenbügel durch eine Schutzvorrichtung nach einem der Ansprüche 1 bis 3 aufgenommen wird.

**Claims**

1. Device for the temporary protection of a temple of a pair of spectacles against chemical treatment agents used for hair treatment, said device comprising an elongated casing (10) which can be fitted on the temple of a pair of spectacles and having the following features :

— the casing (10) is formed from two plastic material sheets welded together along longitudinal sides, said material being impermeable to the chemical treatment agents,

— the casing is closed on its two longitudinal sides and has at least one open end,

— the casing has, along all its length, a sufficient width so that the temple of a pair of spectacles is loosely held, whereby plenty space remains about the temple and insertion of such a temple of a pair of spectacles is easy, and

— the casing has a sufficient length so that it normally covers the entire length or most of the length of a temple of a pair of spectacles.

2. Device as in claim 1, characterized in that the casing (10) is in the shape of a crosse.

3. Device as in one of the claims 1 and 2, characterized in that the casing (10) has one single open end (18), and in that the borders (20, 22) of the opening of the open end are offset from one another in the longitudinal linear direction of the casing.

4. Block of protective devices for the temples of spectacles, characterized in that it comprises

— a support sheet (30), and

— a plurality of devices (10) intended for protection according to any one of the preceding claims, adhering to the support sheet.

5. Block as in claim 4, characterized in that the support sheet (30) is formed of paper.

6. Block as in either one of the claims 4 or 5, characterized in that the protective devices (10) are adhered directly to the support sheet by means of their plastic material.

7. Process for the protection of a temple of a pair of spectacles during the treatment of hair by chemical agents, characterized in that it includes the sheathing of each temple of the spectacles by a protective device as in any one of the claims 1 to 3.

_Fig 1_

_Fig 2_

_Fig 3_